# FASCICULE DE BREVET EUROPEEN

(11) **EP 1 691 498 B1**
(45) Date de publication et mention de la délivrance du brevet: **23.04.2008**
(21) Numéro de dépôt: 06101099.7
(22) Date de dépôt: 31.01.2006
(51) Int. Cl.: H04J 3/06, H03L 7/06, G06F 11/16

(54) **Dispositif de synchronisation à redondance de signaux d'horloge, pour un équipement d'un réseau de transport synchrone**
Synchrones Telekommunikationsgerät mit einer Einrichtung zur Synchronisation redundanter Taktsignale
Synchronous telecommunications equipment with device for synchronising redundant clock signals

(30) Priorité: 15.02.2005 FR 0550429
(43) Date de publication de la demande: 16.08.2006
(73) Titulaire: Alcatel Lucent, 75008 Paris (FR)
(72) Inventeur: Dollo, Philippe, 22300 Lannion (FR); Stephan, M. Yannick, 22730 Tregastel (FR); Morin, Benoit, 22700 Perros-Guirec (FR)
(74) Mandataire: Sciaux, Edmond

(56) Documents cités:
- EP-A- 0 530 393
- EP-A- 0 982 890
- JP-A- 5 268 202
- US-A- 4 282 493
- US-A- 5 881 113

## Description

L'invention concerne les réseaux de transport synchrones, et plus précisément les dispositifs de synchronisation temporelle utilisés dans certains équipements de ces réseaux.

On entend ici par « réseau de transport synchrone » par exemple des réseaux de type SDH/SONET, TDM ou PDH, et leurs équivalents.

Par ailleurs, on entend ici par « équipement », tout type d'équipement de réseau nécessitant une synchronisation temporelle, comme par exemple un commutateur, un contrôleur de réseau radio (RNC (pour « Radio Network Controller ») ou BSC (pour « Base Station Controller »)), une passerelle média ou MGW (pour « Media GateWay »), un multiplexeur d'insertion/extraction (ou ADM pour « Add and Drop Multiplexer »), ou un autocommutateur, éventuellement de type E10.

La synchronisation temporelle est destinée à fournir des signaux d'horloge de référence (également appelés « références d'horloge ») aux équipements précités afin qu'ils puissent effectuer leurs traitements temporels, comme par exemple ceux destinés à restituer des services le plus fidèlement possible ou ceux permettant de synchroniser le réseau de transport. Elle est donc d'une grande importance dans les réseaux de transport synchrones.

Les signaux d'horloge qui sont utilisés par les équipements de réseau, du type précité, sont dits de niveau 3 (appelé G813 en Europe ou stratum 3 aux USA). Ils sont dérivés de signaux d'horloge dits de niveau 2 (appelé G812 en Europe ou stratum 2 aux USA), fournis par des équipements appelés SSU (pour « Synchronization Supply Unit ») en Europe ou BITS (pour « Building Integrated Timing Source ») aux USA, et eux-mêmes dérivés de signaux d'horloge dits de niveau 1 (appelé G811 en Europe ou stratum 1 aux USA), fournis par des équipements, tels que des horloges atomiques. Le niveau 1 représente ici le niveau de précision le plus élevé, c'est-à-dire présentant la plus faible dérive temporelle.

Généralement chaque réseau de transport synchrone comporte des équipements BITS et/ou SSU raccordés à une horloge atomique et auxquels peuvent être raccordés des équipements de réseau comportant des dispositifs de synchronisation.

Afin d'assurer une continuité de service au sein de ces réseaux, il est nécessaire de prévoir non seulement une redondance au niveau des équipements de réseau, mais également une redondance au niveau des signaux d'horloge de référence délivrés par les dispositifs de synchronisation. En outre, il est préférable que la variation de phase entre des signaux d'horloge redondants soit la plus faible possible.

Les dispositifs de synchronisation connus utilisent deux modules de synchronisation qui reçoivent chacun sur deux voies d'entrée des signaux d'horloge de référence, par exemple de niveau 2, afin de constituer et délivrer chacun un signal d'horloge, par exemple de niveau 3. Chaque signal d'horloge de référence de niveau 3 étant fréquemment constitué à partir de deux signaux d'horloges de référence de niveau 2, ces dispositifs de synchronisation n'assurent donc pas une véritable redondance.

Par exemple, le document US 5.881.113 décrit un système de commutation comprenant deux modules d'horloge. Chaque module comprenant :
- une boucle à verrouillage de phase recevant un signal de référence de synchronisation du réseau, pour produire un signal d'horloge principal ;
- un générateur d'horloge comptant les impulsions fournies par ce signal d'horloge principal pour produire divers signaux d'horloge, dont un signal de synchronisation de trame ;
- et un synchroniseur produisant un signal de synchronisation pour synchroniser entre eux les deux modules d'horloge.

Les dispositifs de synchronisation connus effectuent de façon externe, sur chaque entrée recevant un signal d'horloge de référence de niveau 2, un croisement (ou « cross over ») inter-modules. Par conséquent, lorsque l'un des signaux d'horloge de référence de niveau 2 ne peut pas alimenter le dispositif de synchronisation, il peut arriver que survienne une discontinuité de service.

Les dispositifs de synchronisation connus n'étant pas suffisamment fiables et/ou performants, l'invention a donc pour but d'améliorer la situation, et si possible d'offrir une meilleure garantie de conformité vis-à-vis des normes pour un nombre de pannes plus important.

Elle propose à cet effet un dispositif de synchronisation, pour un équipement d'un réseau de transport synchrone, comprenant :
- un premier module de synchronisation comportant :
   - un premier sous-module chargé de délivrer un premier signal d'horloge intermédiaire défini sélectivement à partir d'un signal choisi parmi au moins un premier signal d'horloge de référence externe et au moins un signal d'horloge de référence interne, après un éventuel changement de fréquence,
   - un deuxième sous-module chargé de délivrer un premier signal d'horloge de référence, dit principal, défini sélectivement à partir d'un signal choisi parmi le premier signal d'horloge intermédiaire et un second signal d'horloge intermédiaire, et
   - un troisième sous-module chargé de délivrer un premier signal d'horloge de référence, dit de sortie, défini sélectivement à partir d'un signal choisi parmi le premier signal principal et un second signal principal, après un éventuel changement de fréquence et,
- un second module de synchronisation comportant :
   - un premier sous-module chargé de délivrer le second signal d'horloge intermédiaire défini sélectivement à partir d'un signal choisi parmi au moins un autre premier signal d'horloge de référence externe et au moins un autre signal d'horloge de référence interne, après un éventuel changement de fréquence,
   - un deuxième sous-module chargé de délivrer le second signal principal défini sélectivement à partir de l'un des second et premier signaux d'horloge intermédiaires, et
   - un troisième sous-module chargé de délivrer un second signal d'horloge de référence, dit de sortie, défini sélectivement à partir de l'un des second et premier signaux principaux, après un éventuel changement de fréquence.

Le dispositif de synchronisation selon l'invention peut comporter d'autres caractéristiques qui peuvent être prises séparément ou en combinaison, et notamment :
- le premier sous-module du premier module peut être chargé de délivrer le premier signal d'horloge intermédiaire défini sélectivement à partir d'un signal choisi parmi le premier signal externe, un second signal d'horloge de référence externe, et au moins le signal d'horloge de référence interne, après un éventuel changement de fréquence, et le premier sous-module du second module peut être chargé de délivrer le second signal d'horloge intermédiaire défini sélectivement à partir d'un signal choisi parmi l'autre premier signal externe, un autre second signal d'horloge de référence externe, et au moins l'autre signal d'horloge de référence interne, après un éventuel changement de fréquence ;
- en variante le premier sous-module du premier module peut être chargé de délivrer le premier signal d'horloge intermédiaire défini sélectivement à partir d'un signal choisi parmi le premier signal externe, un second signal d'horloge de référence externe, et au moins deux signaux d'horloge de référence interne d'origines différentes, après un éventuel changement de fréquence, et le premier sous-module du second module peut être chargé de délivrer le second signal d'horloge intermédiaire défini sélectivement à partir d'un signal choisi parmi l'autre premier signal externe, un autre second signal d'horloge de référence externe, et au moins deux autres signaux d'horloge de référence interne d'origines différentes, après un éventuel changement de fréquence ;
- le premier module peut comprendre un quatrième sous-module chargé de générer le premier signal d'horloge de référence externe à partir d'un premier pré-signal d'horloge de référence externe, et le second module peut comprendre un quatrième sous-module agencé pour générer l'autre premier signal d'horloge de référence externe à partir d'un autre premier pré-signal d'horloge de référence externe ;
- le premier module peut comprendre un cinquième sous-module chargé de générer le second signal d'horloge de référence externe à partir d'un second pré-signal d'horloge de référence externe, et le second module peut comprendre un cinquième sous-module chargé de générer l'autre second signal d'horloge de référence externe à partir d'un autre second pré-signal d'horloge de référence externe ;
- les premiers et seconds pré-signaux d'horloge de référence externes sont par exemple respectivement issus d'un équipement source de type BITS et d'un équipement source de type SSU ;
   - le premier sous-module du premier module est alors par exemple chargé de changer la fréquence du second signal externe de manière à constituer le premier signal intermédiaire, et le premier sous-module du second module est par exemple chargé de changer la fréquence de l'autre second signal externe de manière à constituer le second signal intermédiaire ;
- en variante les premiers et seconds pré-signaux d'horloge de référence externes sont par exemple respectivement issus d'un équipement source de type SSU et d'un équipement source de type BITS ;
   - le premier sous-module du premier module est alors par exemple chargé de changer la fréquence du premier signal externe de manière à constituer le premier signal intermédiaire, et le premier sous-module du second module est par exemple chargé de changer la fréquence de l'autre premier signal externe de manière à constituer le second signal intermédiaire ;
- le deuxième sous-module du premier module peut comprendre une entrée primaire pouvant recevoir le premier signal d'horloge intermédiaire, une entrée secondaire pouvant recevoir le second signal d'horloge intermédiaire, et une entrée tertiaire pouvant recevoir le second signal principal, et peut être chargé d'aligner la phase du second signal principal (reçu sur l'entrée tertiaire) sur la phase du premier signal principal de manière à rattraper au moins partiellement un éventuel écart de phase entre les second et premier signaux principaux. De même, le deuxième sous-module du second module peut comprendre une entrée primaire pouvant recevoir le second signal d'horloge intermédiaire, une entrée secondaire pouvant recevoir le premier signal d'horloge intermédiaire, et une entrée tertiaire pouvant recevoir le premier signal principal, et peut être chargé d'aligner la phase du premier signal principal (reçu sur l'entrée tertiaire) sur la phase du second signal principal de manière à rattraper au moins partiellement un éventuel écart de phase entre les premier et second signaux principaux ;
- le troisième sous-module du premier module peut comprendre au moins deux sorties pouvant délivrer le premier signal de sortie selon aux moins deux fréquences différentes. De même, le troisième sous-module du second module peut comprendre au moins deux sorties pouvant délivrer le second signal de sortie selon aux moins deux fréquences différentes ;
- le premier module peut comprendre des premiers moyens de sélection chargés de recevoir chaque signal d'horloge de référence interne et de délivrer sélectivement sur une sortie un signal d'horloge de référence interne reçu, des deuxièmes moyens de sélection chargés de recevoir le signal d'horloge de référence interne délivré par les premiers moyens de sélection pour le délivrer sélectivement sur une sortie raccordée au quatrième sous-module, et/ou des troisièmes moyens de sélection chargés de recevoir le signal d'horloge de référence interne délivré par les premiers moyens de sélection pour le délivrer sélectivement sur une sortie raccordée au cinquième sous-module. Le quatrième sous-module du premier module peut être chargé de délivrer sur une sortie le signal d'horloge de référence interne (fourni par les deuxièmes moyens de sélection) en vue d'une synchronisation externe du premier pré-signal d'horloge de référence externe sur sa fréquence, et/ou le cinquième sous-module du premier module peut être chargé de délivrer sur une sortie le signal d'horloge de référence interne (fourni par les deuxièmes moyens de sélection) en vue d'une synchronisation externe du second pré-signal d'horloge de référence externe sur sa fréquence. De même, le second module peut comprendre des premiers moyens de sélection chargés de recevoir chaque autre signal d'horloge de référence interne et de délivrer sélectivement sur une sortie un autre signal d'horloge de référence interne reçu, des deuxièmes moyens de sélection chargés de recevoir l'autre signal d'horloge de référence interne délivré par les premiers moyens de sélection pour le délivrer sélectivement sur une sortie raccordée au quatrième sous-module, et/ou des troisièmes moyens de sélection chargés de recevoir l'autre signal d'horloge de référence interne délivré par les premiers moyens de sélection pour le délivrer sélectivement sur une sortie raccordée au cinquième sous-module. Le quatrième sous-module du second module peut être chargé de délivrer sur une sortie l'autre signal d'horloge de référence interne (fourni par les deuxièmes moyens de sélection) en vue d'une synchronisation externe de l'autre premier pré-signal d'horloge de référence externe sur sa fréquence, et/ou le cinquième sous-module du second module peut être chargé de délivrer sur une sortie l'autre signal d'horloge de référence interne (fourni par les deuxièmes moyens de sélection) en vue d'une synchronisation externe de l'autre second pré-signal d'horloge de référence externe sur sa fréquence ;
   - le premier sous-module et les premiers, deuxièmes et troisièmes moyens de sélection de chacun des premier et second modules sont par exemple respectivement regroupés au sein d'un sixième sous-module ;
   - les deuxièmes et/ou les troisièmes moyens de sélection de chacun des premier et second modules peuvent comporter une entrée propre à recevoir le premier ou le second signal de sortie, de manière à alimenter le quatrième et/ou le cinquième sous-module soit avec le signal d'horloge de référence interne délivré par les premiers moyens de sélection, soit avec le premier ou le second signal de sortie ;
- le troisième sous-module du premier module peut être chargé de changer la fréquence du premier signal principal et/ou du second signal principal de manière à constituer le premier signal de sortie, et le troisième sous-module du second module peut être chargé de changer la fréquence du premier signal principal et/ou du second signal principal de manière à constituer le second signal de sortie.

L'invention propose également un équipement de réseau de transport synchrone équipé d'un dispositif de synchronisation du type de celui présenté ci-avant.

L'invention est particulièrement bien adaptée, bien que de façon non exclusive, aux réseaux de transport synchrones de type SDH/SONET, TDM ou PDH.

D'autres caractéristiques et avantages de l'invention apparaîtront à l'examen de la description détaillée ci-après, et des dessins annexés, sur lesquels :
- la figure 1 illustre de façon très schématique et fonctionnelle un exemple de réalisation d'un dispositif de synchronisation selon l'invention,
- la figure 2 détaille schématiquement et fonctionnellement un exemple de réalisation du premier module MA du dispositif de synchronisation de la figure 1.

Les dessins annexés pourront non seulement servir à compléter l'invention, mais aussi contribuer à sa définition, le cas échéant.

L'invention a pour objet de permettre une redondance effective des signaux d'horloge de référence destinés à des équipements d'un réseau de transport synchrone, comme par exemple un réseau TDM (pour « Time Division Multiplexing » - multiplexage temporel) ou SDH/SONET ou encore PDH (pour « Plesiosynchronious Digital Hierarchy » - hiérarchie numérique quasi-synchrone).

Pour ce faire, l'invention propose un dispositif de synchronisation destiné à être implanté dans un équipement de réseau nécessitant une synchronisation temporelle redondante, comme par exemple un commutateur (ou « switch »), un contrôleur de réseau radio (RNC ou BSC), une passerelle média (MGW ou Media Gateway), un multiplexeur d'insertion/extraction (ADM), ou un autocommutateur, éventuellement de type E10.

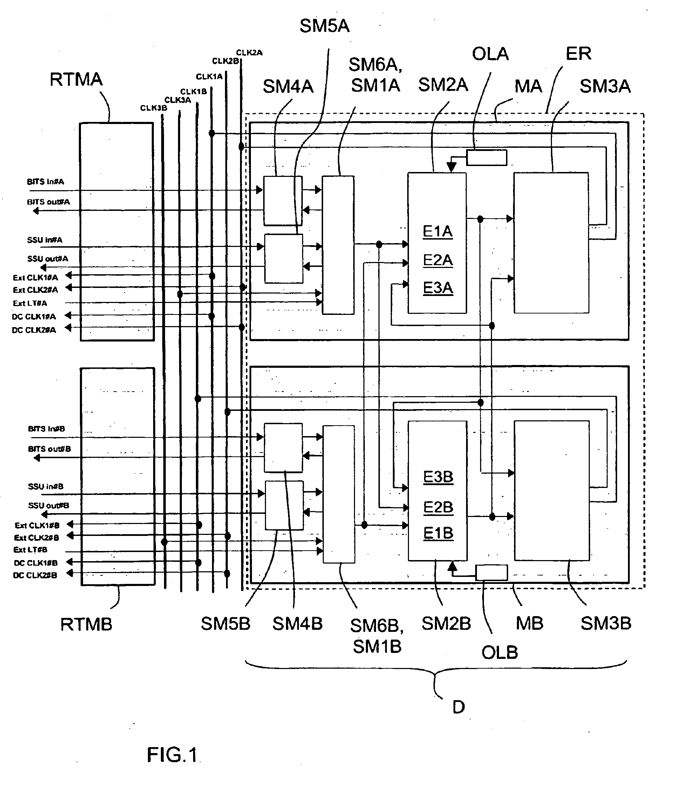

Comme cela est illustré sur la figure 1, le dispositif de synchronisation D peut par exemple être implanté sur une carte C de circuits imprimés, destinée à être raccordée à des modules de transition arrière (ou RTM pour « Rear Transition Module ») RTMA et RTMB, via un fond de panier (ou « mid plane ») d'un rayonnage (ou « shelf ») de l'équipement de réseau.

Le dispositif de synchronisation D selon l'invention comporte deux modules de synchronisation MA et MB, ici préférentiellement implantés sur deux cartes différentes d'un équipement de réseau ER.

Les deux modules de synchronisation MA et MB sont sensiblement identiques sur le plan fonctionnel. L'un est habituellement maître lorsque l'autre est esclave.

Le premier module de synchronisation MA comprend au moins trois sous-modules SM1A, SM2A et SM3A.

Le premier sous-module SM1A comprend au moins une première entrée destinée à recevoir un premier signal d'horloge de référence externe (par exemple de niveau 2) et au moins une deuxième entrée destinée à recevoir un premier signal d'horloge de référence interne, par exemple CLK3A qui provient d'une carte du châssis dans lequel est implanté le dispositif de synchronisation D, ou bien Ext LT#A qui provient d'un second châssis d'extension.

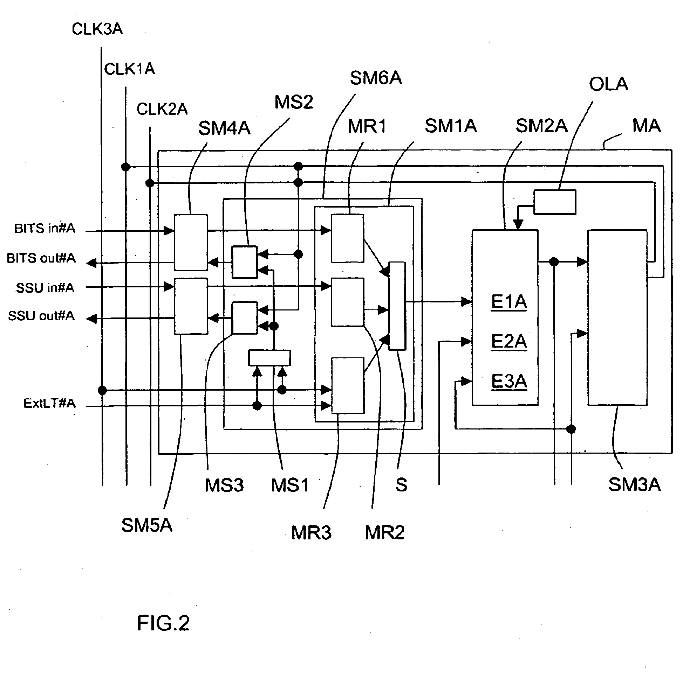

Dans l'exemple non limitatif illustré sur les figures 1 et 2, le premier module MA comprend un quatrième sous-module SM4A qui comprend une sortie destinée à alimenter la première entrée du premier sous-module SM1A avec le premier signal d'horloge de référence externe. Ce quatrième sous-module SM4A comprend une entrée destinée à recevoir un premier pré-signal d'horloge de référence externe, à partir duquel il génère le premier signal d'horloge de référence externe qui alimente le premier sous-module SM1A.

Dans l'exemple illustré, le premier pré-signal d'horloge de référence externe est le pré-signal que l'homme de l'art appelle BITS in#A, lequel est délivré par un équipement appelé BITS (pour « Building Integrated Timing Source »). Dans ce cas, le quatrième sous-module SM4A est destiné à traiter le premier pré-signal reçu sous la forme de trames de type T1, pour le décoder et en extraire le rythme et la trame permettant de constituer le premier signal d'horloge de référence externe. Un tel sous-module est fréquemment appelé en anglais « LIU + T1 framer ».

Dans une variante, le premier pré-signal d'horloge de référence externe pourrait être le pré-signal que l'homme de l'art appelle SSU in#A, lequel est délivré par un équipement appelé SSU (pour « Synchronization Supply Unit »). Dans ce cas, le quatrième sous-module SM4A est destiné à traiter le premier pré-signal reçu pour retrouver le signal dégradé par la transmission et constituer le premier signal d'horloge de référence externe. Le traitement peut également consister à diviser la fréquence du premier pré-signal reçu, par exemple pour qu'elle devienne égale à 8 KHz. Un tel sous-module est fréquemment appelé en anglais « 2 MHz LIU ».

Dans l'exemple non limitatif illustré sur les figures 1 et 2, le premier sous-module SM1A comprend également une troisième entrée destinée à recevoir un second signal d'horloge de référence externe (par exemple de niveau 2) et une quatrième entrée destinée à recevoir un second signal d'horloge de référence interne, par exemple Ext LT#A qui provient d'un second châssis d'extension, ou bien CLK3A qui provient d'une carte du châssis dans lequel est implanté le dispositif de synchronisation D.

Par ailleurs, dans l'exemple non limitatif illustré sur les figures 1 et 2, le premier module MA comprend un cinquième sous-module SM5A qui comprend une sortie destinée à alimenter la troisième entrée du premier sous-module SM1A avec le second signal d'horloge de référence externe. Ce cinquième sous-module SM5A comprend une entrée destinée à recevoir un second pré-signal d'horloge de référence externe, à partir duquel il génère le second signal d'horloge de référence externe qui alimente le premier sous-module SM1A.

Dans l'exemple illustré, le second pré-signal d'horloge de référence externe est le pré-signal que l'homme de l'art appelle SSU in#A, lequel est délivré par un équipement SSU. Dans ce cas, le cinquième sous-module SM5A est destiné à traiter le second pré-signal reçu pour retrouver le signal dégradé par la transmission et constituer le second signal d'horloge de référence externe. Le traitement peut également consister à diviser la fréquence du second pré-signal reçu, par exemple pour qu'elle devienne égale à 8 KHz.

Dans une variante, le second pré-signal d'horloge de référence externe pourrait être le pré-signal que l'homme de l'art appelle BITS in#A, lequel est délivré par un équipement BITS. Dans ce cas, le cinquième sous-module SM5A est destiné à traiter le second pré-signal reçu sous la forme de trames de type T1, pour le décoder et en extraire le rythme et la trame permettant de constituer le second signal d'horloge de référence externe.

Dans une autre variante, on peut envisager que chaque module de synchronisation MA et MB, du dispositif de synchronisation D, comporte des quatrième et cinquième sous-modules destinés à traiter des pré-signaux délivrés par deux équipements BITS ou bien par deux équipements SSU.

Chaque signal d'horloge de référence interne (ou « line timing ») présente par exemple une fréquence de 8 kHz, les trames T1 (du premier pré-signal d'horloge de référence externe) parviennent par exemple selon un débit de 1,544 Mbits/s et permettent de générer un premier signal d'horloge de référence externe présentant par exemple une fréquence de 8 kHz, et chaque second pré-signal d'horloge de référence externe présente par exemple une fréquence de 2 MHz.

Le premier sous-module SM1A comporte, comme cela est illustré sur la figure 2, un premier sous-module de réception MR1 chargé de recevoir le premier signal d'horloge de référence externe et de délivrer un premier signal d'horloge intermédiaire, un deuxième sous-module de réception MR2 chargé de recevoir le second signal d'horloge de référence externe et de délivrer un premier signal d'horloge intermédiaire après un éventuel changement de fréquence (de 2 MHz à 8 kHz), s'il n'a pas été effectué par le cinquième sous-module SM5A, et un troisième sous-module de réception MR3 chargé de recevoir les signaux d'horloge de référence internes et de délivrer un premier signal d'horloge intermédiaire.

Bien entendu, il pourrait n'y avoir que deux sous-modules de réception, par exemple MR1 et MR3 ou MR2 et MR3.

Chaque sous-module de réception MR1, MR2 et MR3 est couplé à un sous-module de sélection S chargé de sélectionner l'un des premiers signaux d'horloge intermédiaires qu'ils délivrent respectivement pour le délivrer lui-même sur une sortie (à 8 kHz).

Le premier sous-module SM1A est fréquemment appelé en anglais « BITS/SSU/Line Timing Select ».

Le deuxième sous-module SM2A comprend au moins une entrée primaire E1A destinée à recevoir le premier signal d'horloge intermédiaire délivré par la sortie du premier sous-module SM1A et une entrée secondaire E2A destinée à recevoir un second signal d'horloge intermédiaire délivré par la sortie du premier sous-module SM1B du second module MB (comme on le verra plus loin).

Dans l'exemple non limitatif illustré sur les figures 1 et 2, le deuxième sous-module SM2A comprend également une entrée tertiaire E3A destinée à recevoir un second signal principal délivré par la sortie du deuxième sous-module SM2B du second module MB (comme on le verra plus loin).

Le deuxième sous-module SM2A est chargé de sélectionner l'un des signaux qu'il reçoit sur l'une de ses entrées primaire E1A et secondaire E2A, ainsi qu'éventuellement tertiaire E3A, afin de le délivrer sur une sortie. Ce signal délivré par le deuxième sous-module SM2A est ici appelé « premier signal d'horloge de référence principal ».

Lorsque le premier signal d'horloge intermédiaire n'est pas disponible au niveau du deuxième sous-module SM2A, il faut utiliser le second signal d'horloge intermédiaire délivré par le premier sous-module SM1B du second module MB pour générer le premier signal d'horloge de référence principal. Le second signal d'horloge intermédiaire (qui est reçu sur l'entrée secondaire E2A) présentant la phase du second module MB, il est synchrone en fréquence, et éventuellement en phase, par rapport au premier signal d'horloge de référence principal.

Préférentiellement et comme illustré sur les figures 1 et 2, l'invention propose de synchroniser en phase les premier et second signaux principaux respectivement délivrés par les deuxièmes sous-modules SM2A et SM2B du dispositif D. Pour ce faire, le deuxième sous-module SM2A aligne (de préférence progressivement) la phase du second signal principal qu'il reçoit sur son entrée tertiaire E3A sur la phase du premier signal principal qu'il délivre sur sa sortie, afin de rattraper au moins partiellement leur éventuel écart de phase.

On peut par exemple utiliser des PLL (éventuellement de type numérique) pour rattraper l'écart de phase.

Grâce à cet agencement des modules MA et MB, un unique croisement (ou « cross over ») inter-modules est effectué, de façon interne. Cela permet notamment de limiter les sauts de phase.

Le deuxième sous-module SM2A est fréquemment appelé en anglais « Clock Generator » (générateur de signaux d'horloge). Il peut par exemple être réalisé sous la forme d'un circuit intégré spécialisé ou ASIC (éventuellement de type numérique).

Comme cela est illustré sur les figures 1 et 2, le deuxième sous-module SM2A peut être raccordé à un oscillateur local OLA. Cela permet de garantir au premier module de synchronisation MA un rythme en mode autonome, en cas de basculement des entrées E1A et E2A, consécutif à une panne ayant entraînée la perte de toute référence.

Le troisième sous-module SM3A comporte une première entrée destinée à recevoir le premier signal principal (délivré par la sortie du deuxième sous-module SM2A de son premier module MA) et une seconde entrée destinée à recevoir le second signal principal (délivré par la sortie du deuxième sous-module SM2B du second module MB).

Il est chargé de délivrer sur une sortie un premier signal d'horloge de référence, dit de sortie, qui est soit le premier signal principal reçu, après un éventuel changement de fréquence, soit le second signal principal reçu, après un éventuel changement de fréquence.

Le changement de fréquence peut permettre de choisir la fréquence de sortie. On peut ainsi délivrer des signaux de sortie présentant une fréquence soit de 8 kHz, soit de 19,44 MHz, par exemple.

Dans l'exemple non limitatif illustré sur les figures 1 et 2, le troisième sous-module SM3A peut comprendre plusieurs sorties (ici deux). Ces différentes sorties sont destinées à délivrer des premiers signaux de sortie présentant des fréquences différentes. Ici, une première sortie fournit le premier signal d'horloge de référence de sortie Ext CLK1#A (par exemple à 8 kHz), tandis que la seconde sortie fournit le premier signal d'horloge de référence de sortie Ext CLK2#A (par exemple à 19,44 MHz).

Le troisième sous-module SM3B est fréquemment appelé en anglais « Reference Clock Distribution » (distribution de signaux d'horloge de référence).

Le second module de synchronisation MB comprend au moins trois sous-modules SM1 B, SM2B et SM3B.

Le premier sous-module SM1B comprend au moins une première entrée destinée à recevoir un autre premier signal d'horloge de référence externe (par exemple de niveau 2) et au moins une deuxième entrée destinée à recevoir un autre premier signal d'horloge de référence interne, par exemple CLK3B ou Ext LT#B.

Dans l'exemple non limitatif illustré sur les figures 1 et 2, le second module MB comprend un quatrième sous-module SM4B qui comprend une sortie destinée à alimenter la première entrée du premier sous-module SM1B avec l'autre premier signal d'horloge de référence externe. Ce quatrième sous-module SM4B comprend une entrée destinée à recevoir un autre premier pré-signal d'horloge de référence externe, à partir duquel il génère l'autre premier signal d'horloge de référence externe qui alimente le premier sous-module SM1B.

Dans l'exemple illustré, l'autre premier pré-signal d'horloge de référence externe est le pré-signal que l'homme de l'art appelle BITS in#B, lequel est délivré par un équipement appelé BITS. Dans ce cas, le quatrième sous-module SM4B est destiné à traiter l'autre premier pré-signal reçu sous la forme de trames de type T1, pour le décoder et en extraire le rythme et la trame permettant de constituer l'autre premier signal d'horloge de référence externe. Un tel sous-module est fréquemment appelé en anglais « LIU + T1 framer ».

Dans une variante, l'autre premier pré-signal d'horloge de référence externe pourrait être le pré-signal que l'homme de l'art appelle SSU in#B, lequel est délivré par un équipement appelé SSU. Dans ce cas, le quatrième sous-module SM4A est destiné à traiter l'autre premier pré-signal reçu pour retrouver le signal dégradé par la transmission et constituer l'autre premier signal d'horloge de référence externe. Le traitement peut également consister à diviser la fréquence du pré-signal reçu, par exemple pour qu'elle devienne égale à 8 KHz. Un tel sous-module est fréquemment appelé en anglais « 2 MHz LIU ».

Dans l'exemple non limitatif illustré sur les figures 1 et 2, le premier sous-module SM1B comprend également une troisième entrée destinée à recevoir un autre second signal d'horloge de référence externe, par exemple de niveau 2, et une quatrième entrée destinée à recevoir un autre second signal d'horloge de référence interne, par exemple Ext LT#B ou CLK3B.

Par ailleurs, dans l'exemple non limitatif illustré sur les figures 1 et 2, le second module MB comprend un cinquième sous-module SM5B qui comprend une sortie destinée à alimenter la troisième entrée du premier sous-module SM1B avec l'autre second signal d'horloge de référence externe. Ce cinquième sous-module SM5B comprend une entrée destinée à recevoir un autre second pré-signal d'horloge de référence externe, à partir duquel il génère l'autre second signal d'horloge de référence externe qui alimente le premier sous-module SM1B.

Dans l'exemple illustré, l'autre second pré-signal d'horloge de référence externe est le pré-signal que l'homme de l'art appelle SSU in#B, lequel est délivré par un équipement SSU. Dans ce cas, le cinquième sous-module SM5B est destiné à traiter l'autre second pré-signal reçu pour retrouver le signal dégradé par la transmission et constituer l'autre second signal d'horloge de référence externe. Le traitement peut également consister à diviser la fréquence du pré-signal reçu, par exemple pour qu'elle devienne égale à 8 KHz.

Dans une variante, l'autre second pré-signal d'horloge de référence externe pourrait être le pré-signal que l'homme de l'art appelle BITS in#B, lequel est délivré par un équipement BITS. Dans ce cas, le cinquième sous-module SM5B est destiné à traiter l'autre second pré-signal reçu sous la forme de trames de type T1, pour le décoder et en extraire le rythme et la trame permettant de constituer l'autre second signal d'horloge de référence externe.

Le premier sous-module SM1B comporte un premier sous-module de réception MR1 chargé de recevoir l'autre premier signal d'horloge de référence externe et de délivrer un second signal d'horloge intermédiaire, un deuxième sous-module de réception MR2 chargé de recevoir l'autre second signal d'horloge de référence externe et de délivrer un second signal d'horloge intermédiaire après un éventuel changement de fréquence (2 MHz à 8 kHz), s'il n'a pas été effectué par le cinquième sous-module SM5A, et un troisième sous-module de réception MR3 chargé de recevoir les signaux d'horloge de référence internes et de délivrer un second signal d'horloge intermédiaire.

Bien entendu, il pourrait n'y avoir que deux sous-modules de réception, par exemple MR1 et MR3 ou MR2 et MR3.

Chaque sous-module de réception MR1, MR2 et MR3 est couplé à un sous-module de sélection S chargé de sélectionner l'un des seconds signaux d'horloge intermédiaires qu'ils délivrent respectivement pour le délivrer lui-même sur une sortie (à 8 kHz).

Le premier sous-module SM1B est fréquemment appelé en anglais « BITS/SSU/Line Timing Select ».

Le deuxième sous-module SM2B comprend au moins une entrée primaire E1B destinée à recevoir le second signal d'horloge intermédiaire délivré par la sortie du premier sous-module SM1B et une entrée secondaire E2B destinée à recevoir le premier signal d'horloge intermédiaire délivré par la sortie du premier sous-module SM1A du premier module MA.

Dans l'exemple non limitatif illustré sur les figures 1 et 2, le deuxième sous-module SM2B comprend également une entrée tertiaire E3B destinée à recevoir le premier signal principal délivré par la sortie du deuxième sous-module SM2A du premier module MA.

Le deuxième sous-module SM2B est chargé de sélectionner l'un des signaux qu'il reçoit sur l'une de ses entrées primaire E1 B et secondaire E2B, ainsi qu'éventuellement tertiaire E3B, afin de le délivrer sur une sortie. Ce signal délivré par le deuxième sous-module SM2B est ici appelé « second signal d'horloge de référence principal ».

Lorsque le second signal d'horloge intermédiaire n'est pas disponible au niveau du deuxième sous-module SM2B, il faut utiliser le premier signal d'horloge intermédiaire délivré par le premier sous-module SM1A du premier module MA pour générer le second signal d'horloge de référence principal. Le premier signal d'horloge intermédiaire (qui est reçu sur l'entrée secondaire E2B) présentant la phase du premier module MA, il est synchrone en fréquence, et éventuellement en phase par rapport au second signal d'horloge de référence principal.

Préférentiellement et comme illustré sur les figures 1 et 2, l'invention propose de synchroniser en phase les second et premier signaux principaux respectivement délivrés par les deuxièmes sous-modules SM2B et SM2A du dispositif D. Pour ce faire, le deuxième sous-module SM2B aligne (de préférence progressivement) la phase du premier signal principal qu'il reçoit sur son entrée tertiaire E3B sur la phase du second signal principal qu'il délivre sur sa sortie, afin de rattraper au moins partiellement leur éventuel écart de phase.

On peut par exemple utiliser des PLL (éventuellement de type numérique) pour rattraper l'écart de phase.

Le deuxième sous-module SM2B est fréquemment appelé en anglais « Clock Generator » (générateur de signaux d'horloge). Il peut par exemple être réalisé sous la forme d'un circuit intégré spécialisé ou ASIC (éventuellement de type numérique).

Comme cela est illustré sur les figures 1 et 2, le deuxième sous-module SM2B peut être raccordé à un oscillateur local OLB. Cela permet de garantir au second module de synchronisation MB un rythme en mode autonome, en cas de basculement des entrées E1B et E2B, consécutif à une panne ayant entraînée la perte de toute référence.

Le troisième sous-module SM3B comporte une première entrée destinée à recevoir le second signal principal (délivré par la sortie du deuxième sous-module SM2B de son second module MB) et une seconde entrée destinée à recevoir le premier signal principal (délivré par la sortie du deuxième sous-module SM2A du premier module MA).

Il est chargé de délivrer sur une sortie un second signal d'horloge de référence; dit de sortie, qui est soit le second signal principal reçu, après un éventuel changement de fréquence, soit le premier signal principal reçu, après un éventuel changement de fréquence.

Le changement de fréquence peut permettre de choisir la fréquence de sortie. On peut ainsi délivrer des signaux de sortie présentant une fréquence soit de 8 kHz, soit de 19,44 MHz, par exemple.

Dans l'exemple non limitatif illustré sur les figures 1 et 2, le troisième sous-module SM3B peut comprendre plusieurs sorties (ici deux). Ces différentes sorties sont destinées à délivrer des seconds signaux de sortie présentant des fréquences différentes. Ici, une première sortie fournit le second signal d'horloge de référence de sortie Ext CLK1#B (par exemple à 8 kHz), tandis que la seconde sortie fournit le second signal d'horloge de référence de sortie Ext CLK2#B (par exemple à 19,44 MHz).

Le troisième sous-module SM3B est fréquemment appelé en anglais « Reference Clock Distribution » (distribution de signaux d'horloge de référence).

L'architecture proposée par le dispositif de synchronisation selon l'invention assure une redondance totale des signaux d'horloge de référence qu'il délivre sur ses sorties, dès lors qu'au moins l'un de ses deux modules de synchronisation MA et MB reçoit un (pré-)signal d'horloge de référence externe ou interne.

En effet, si un problème survient en amont du deuxième sous-module (dock generator) SM2A de son premier module MA, ledit deuxième sous-module SM2A peut utiliser le signal intermédiaire qu'il reçoit sur son entrée secondaire et qui provient du premier sous-module SM1B du second module MB pour délivrer un signal principal. De même, si un problème survient en amont du deuxième sous-module (dock generator) SM2B de son second module MB, ledit deuxième sous-module SM2B peut utiliser le signal intermédiaire qu'il reçoit sur son entrée secondaire et qui provient du premier sous-module SM1A du premier module MA pour délivrer un signal principal. Maintenant, si un problème survient en amont du troisième sous-module (reference dock distribution) SM3A de son premier module MA, ledit troisième sous-module SM3A peut utiliser le signal principal qu'il reçoit sur sa seconde entrée et qui provient du deuxième sous-module SM2B du second module MB pour délivrer un signal de sortie. De même, si un problème survient en amont du troisième sous-module SM3B de son second module MB, ledit troisième sous-module SM3B peut utiliser le signal principal qu'il reçoit sur sa seconde entrée et qui provient du deuxième sous-module SM2A du premier module MA pour délivrer un signal de sortie. Enfin, si un problème survient au niveau du troisième sous-module SM3A de son premier module MA, le troisième sous-module SM3B de son second module MB peut délivrer son signal principal. De même, si un problème survient au niveau du troisième sous-module SM3B de son second module MB, le troisième sous-module SM3A de son premier module MA peut délivrer son signal principal.

Chaque module MA et MB du dispositif de synchronisation D peut être également agencé de manière à délivrer au moins un signal d'horloge de référence interne reçu de manière à synchroniser au moins un (pré-)signal d'horloge de référence externe sur sa fréquence.

Pour ce faire, et comme illustré sur la figure 2, chaque module MA et MB peut comporter:
- un premier sous-module de sélection MS1 destiné à recevoir chaque signal d'horloge de référence interne (ici Ext LT#A et CLK3A ou Ext LT#B et CLK3B) de manière à délivrer sélectivement l'un d'entre eux sur une sortie,
- un deuxième sous-module de sélection MS2 destiné à recevoir le signal d'horloge de référence interne qui est délivré par le premier sous-module de sélection MS1 de manière à le délivrer sélectivement sur une sortie raccordée au quatrième sous-module correspondant SM4A ou SM4B, et/ou
- un troisième sous-module de sélection MS3 destiné à recevoir le signal d'horloge de référence interne délivré par le premier sous-module de sélection MS1 de manière à le délivrer sélectivement sur une sortie raccordée au cinquième sous-module correspondant SM5A ou SM5B.

Chaque quatrième sous-module SM4A ou SM4B est alors chargé de délivrer sur une sortie (ici référencée BITS out#A ou BITS out#B) le signal d'horloge de référence interne ExtL T#A (ou ExtL T#B) ou CLK3A (ou CLK3B), qui lui a été fourni par le deuxième sous-module de sélection MS2, afin qu'il serve à l'équipement, qui délivre le premier pré-signal d'horloge de référence externe, à synchroniser ce dernier sur sa fréquence. La fréquence du signal d'horloge de référence interne servant à la synchronisation externe est par exemple égale à 8 kHz.

De même, chaque cinquième sous-module SM5A ou SM5B peut être chargé de délivrer sur une sortie (ici référencée SSU out#A ou SSU out#B) le signal d'horloge de référence interne ExtLT#A (ou ExtLT#B) ou CLK3A (ou CLK3B), qui lui a été fourni par le deuxième sous-module de sélection MS2, afin qu'il serve à l'équipement, qui délivre le second pré-signal d'horloge de référence externe, à synchroniser ce dernier sur sa fréquence. La fréquence du signal d'horloge de référence interne servant à la synchronisation externe est par exemple égale à 8 kHz.

Comme cela est illustré de façon non limitative sur la figure 2, le deuxième sous-module de sélection MS2 de chacun des premier MA et second MB modules de synchronisation peut comporter une seconde entrée destinée à recevoir le premier signal de sortie CLK1A(B) ou CLK2A(B) délivré par l'une des sorties du troisième sous-module SM3A(B). Il peut ainsi alimenter le quatrième sous-module SM4A(B) soit avec le signal d'horloge de référence interne qui est délivré par le premier sous-module de sélection MS1, soit avec le premier signal de sortie CLK1A(B) ou CLK2A(B). Le quatrième sous-module SM4A(B) peut alors délivrer sélectivement sur la sortie BITS out#A(B) le signal de sortie CLK1A(B) ou CLK2A(B) afin que l'on puisse effectuer une mesure de la qualité de la synchronisation effectuée par le module MA ou MB.

En variante ou en complément, le troisième sous-module de sélection MS3 de chacun des premier MA et second MB modules de synchronisation peut également comporter une seconde entrée destinée à recevoir le premier signal de sortie CLK1A(B) ou CLK2A(B) délivré par l'une des sorties du troisième sous-module SM3A(B). Il peut ainsi alimenter le cinquième sous-module SM5A(B) soit avec le signal d'horloge de référence interne qui est délivré par le premier sous-module de sélection MS1, soit avec le second signal de sortie CLK1A(B) ou CLK2A(B). Le cinquième sous-module SM5A(B) peut alors délivrer sélectivement sur la sortie SSU out#A(B) le signal de sortie CLK1A(B) ou CLK2A(B) afin que l'on puisse effectuer une mesure de la qualité de la synchronisation effectuée par le module MA ou MB.

Par ailleurs, comme cela est également illustré de façon non limitative sur la figure 2, le premier sous-module SM1A ou SM1B et les premier MS1, deuxième MS2 et troisième MS3 sous-modules de sélection de chacun des premier MA et second MB modules peuvent être regroupés au sein d'un sixième sous-module SM6A ou SM6B. Mais, dans une variante, les premier MS1, deuxième MS2 et troisième MS3 sous-modules de sélection de chacun des premier MA et second MB modules pourraient être intercalés entre le premier sous-module SM1A ou SM1B et les quatrième SM4A ou SM4B et cinquième SM5A ou SM5B sous-modules.

Dans un contexte d'architecture de type aTCA, les croisements (ou « crossovers ») peuvent utiliser ce que l'homme de l'art appelle des « update channels » (canaux de mise à jour) qui sont fournis par les fonds de paniers pour relier les cartes entre-elles.

L'invention ne se limite pas aux modes de réalisation de dispositif de synchronisation et d'équipement de réseau décrits ci-avant, seulement à titre d'exemple, mais elle englobe toutes les variantes que pourra envisager l'homme de l'art dans le cadre des revendications ci-après.

Ainsi, dans ce qui précède on a décrit un exemple de réalisation d'un dispositif de synchronisation dans lequel chaque module de synchronisation comporte un quatrième (SM4A ou SM4B) et un cinquième sous-module (SM5A ou SM5B). Cela permet en effet d'offrir un dispositif adapté à toutes les situations connues. Bien entendu, lorsque seul l'un des deux sous-modules est nécessaire, l'autre n'est pas utilisé. Mais, on peut également envisager une variante dans laquelle le dispositif de synchronisation ne comprend pas de cinquième sous-module, le quatrième sous-module étant alors adapté au traitement des signaux soit de type BITS, soit de type SSU.

Par ailleurs, l'invention concerne toute application de télécommunication nécessitant une référence de synchronisation fiable.

## Revendications

1. Dispositif de synchronisation (D) pour un équipement d'un réseau de transport synchrone, **caractérisé en ce qu'**il comprend :
- un premier module de synchronisation (MA) comportant i) un premier sous-module (SM1A) agencé pour délivrer un premier signal d'horloge intermédiaire défini sélectivement à partir d'un signal choisi parmi au moins un premier signal d'horloge de référence externe et au moins un signal d'horloge de référence interne, après un éventuel changement de fréquence, ii) un deuxième sous-module (SM2A) agencé pour délivrer un premier signal d'horloge de référence, dit principal, défini sélectivement à partir d'un signal choisi parmi ledit premier signal d'horloge intermédiaire et un second signal d'horloge intermédiaire, et iii) un troisième sous-module (SM3A) agencé pour délivrer un premier signal d'horloge de référence, dit de sortie, défini sélectivement à partir d'un signal choisi parmi ledit premier signal principal et un second signal principal, après un éventuel changement de fréquence et,
- un second module de synchronisation (MB) comportant i) un premier sous-module (SM1 B) agencé pour délivrer ledit second signal d'horloge intermédiaire défini sélectivement à partir d'un signal choisi parmi au moins un autre premier signal d'horloge de référence externe et au moins un autre signal d'horloge de référence interne, après un éventuel changement de fréquence, ii) un deuxième sous-module (SM2B) agencé pour délivrer ledit second signal principal défini sélectivement à partir de l'un desdits second et premier signaux d'horloge intermédiaires, et iii) un troisième sous-module (SM3B) agencé pour délivrer un second signal d'horloge de référence, dit de sortie, défini sélectivement à partir de l'un desdits second et premier signaux principaux, après un éventuel changement de fréquence.

2. Dispositif selon la revendication 1, **caractérisé en ce que** ledit premier sous-module (SM1A) dudit premier module (MA) est agencé pour délivrer ledit premier signal d'horloge intermédiaire défini sélectivement à partir d'un signal choisi parmi ledit premier signal externe, un second signal d'horloge de référence externe, et au moins ledit signal d'horloge de référence interne, après un éventuel changement de fréquence, et **en ce que** ledit premier sous-module (SM1B) dudit second module (MB) est agencé pour délivrer ledit second signal d'horloge intermédiaire défini sélectivement à partir d'un signal choisi parmi ledit autre premier signal externe, un autre second signal d'horloge de référence externe, et au moins ledit autre signal d'horloge de référence interne, après un éventuel changement de fréquence.

3. Dispositif selon la revendication 1, **caractérisé en ce que** ledit premier sous-module (SM1A) dudit premier module (MA) est agencé pour délivrer ledit premier signal d'horloge intermédiaire défini sélectivement à partir d'un signal choisi parmi ledit premier signal externe, un second signal d'horloge de référence externe, et au moins deux signaux d'horloge de référence interne d'origines différentes, après un éventuel changement de fréquence, et **en ce que** ledit premier sous-module (SM1B) dudit second module (MB) est agencé pour délivrer ledit second signal d'horloge intermédiaire défini sélectivement à partir d'un signal choisi parmi ledit autre premier signal externe, un autre second signal d'horloge de référence externe, et au moins deux autres signaux d'horloge de référence interne d'origines différentes, après un éventuel changement de fréquence.

4. Dispositif selon l'une des revendications 1 à 3, **caractérisé en ce que** ledit premier module (MA) comprend un quatrième sous-module (SM4A) agencé pour générer ledit premier signal d'horloge de référence externe à partir d'un premier pré-signal d'horloge de référence externe, et **en ce que** ledit second module (MB) comprend un quatrième sous-module (SM4B) agencé pour générer ledit autre premier signal d'horloge de référence externe à partir d'un autre premier pré-signal d'horloge de référence externe.

5. Dispositif selon l'une des revendications 2 à 4, **caractérisé en ce que** ledit premier module (MA) comprend un cinquième sous-module (SM5A) agencé pour générer ledit second signal d'horloge de référence externe à partir d'un second pré-signal d'horloge de référence externe, et **en ce que** ledit second module (MB) comprend un cinquième sous-module (SM5B) agencé pour générer ledit autre second signal d'horloge de référence externe à partir d'un autre second pré-signal d'horloge de référence externe.

6. Dispositif selon l'une des revendications 4 et 5, **caractérisé en ce que** lesdits premiers et seconds pré-signaux d'horloge de référence externes sont respectivement issus d'un équipement source de type BITS et d'un équipement source de type SSU.

7. Dispositif selon l'une des revendications 1 à 5, **caractérisé en ce que** ledit premier sous-module (SM1A) dudit premier module (MA) est agencé pour changer la fréquence dudit second signal externe de manière à constituer ledit premier signal intermédiaire, et **en ce que** ledit premier sous-module (SM1 B) dudit second module (MB) est agencé pour changer la fréquence dudit autre second signal externe de manière à constituer ledit second signal intermédiaire.

8. Dispositif selon l'une des revendications 4 et 5, **caractérisé en ce que** lesdits premiers et seconds pré-signaux d'horloge de référence externes sont respectivement issus d'un équipement source de type SSU et d'un équipement source de type BITS.

9. Dispositif selon l'une des revendications 1 à 5, **caractérisé en ce que** ledit premier sous-module (SM1A) dudit premier module (MA) est agencé pour changer la fréquence dudit premier signal externe de manière à constituer ledit premier signal intermédiaire, et **en ce que** ledit premier sous-module (SM1B) dudit second module (MB) est agencé pour changer la fréquence dudit autre premier signal externe de manière à constituer ledit second signal intermédiaire.

10. Dispositif selon l'une des revendications 1 à 9, **caractérisé en ce que** :
- ledit deuxième sous-module (SM2A) dudit premier module (MA) i) comprend une entrée primaire (E1A) propre à recevoir ledit premier signal d'horloge intermédiaire, une entrée secondaire (E2A) propre à recevoir ledit second signal d'horloge intermédiaire, et une entrée tertiaire (E3A) propre à recevoir ledit second signal principal, et ii) est agencé pour aligner la phase dudit second signal principal reçu sur ladite entrée tertiaire (E3A) sur la phase dudit premier signal principal de manière à rattraper au moins partiellement un éventuel écart de phase entre lesdits second et premier signaux principaux, et
- ledit deuxième sous-module (SM2B) dudit second module (MB) i) comprend une entrée primaire (E1B) propre à recevoir ledit second signal d'horloge intermédiaire, une entrée secondaire (E2B) propre à recevoir ledit premier signal d'horloge intermédiaire, et une entrée tertiaire (E3B) propre à recevoir ledit premier signal principal, et ii) est agencé pour aligner la phase dudit premier signal principal reçu sur ladite entrée tertiaire (E3B) sur la phase dudit second signal principal de manière à rattraper au moins partiellement un éventuel écart de phase entre lesdits premier et second signaux principaux.

11. Dispositif selon l'une des revendications 4 à 10, **caractérisé en ce que** ledit troisième sous-module (SM3A) dudit premier module (MA) comprend au moins deux sorties pouvant délivrer ledit premier signal de sortie selon aux moins deux fréquences différentes, et **en ce que** ledit troisième sous-module (SM3B) dudit second module (MB) comprend au moins deux sorties pouvant délivrer ledit second signal de sortie selon aux moins deux fréquences différentes.

12. Dispositif selon l'une des revendications 4 à 11, **caractérisé en ce que**:
- ledit premier module (MA) comprend des premiers moyens de sélection (MS1) propres à recevoir chaque signal d'horloge de référence interne et à délivrer sélectivement sur une sortie un signal d'horloge de référence interne reçu, des deuxièmes moyens de sélection (MS2) propres à recevoir ledit signal d'horloge de référence interne délivré par lesdits premiers moyens de sélection (SM1) pour le délivrer sélectivement sur une sortie raccordée audit quatrième sous-module (SM4A), et/ou des troisièmes moyens de sélection (MS3) propres à recevoir ledit signal d'horloge de référence interne délivré par lesdits premiers moyens de sélection (MS1) pour le délivrer sélectivement sur une sortie raccordée au cinquième sous-module (SM5A),
- ledit quatrième sous-module (SM4A) du premier module (MA) est agencé pour délivrer sur une sortie ledit signal d'horloge de référence interne, fourni par lesdits deuxième moyens de sélection (MS2), en vue d'une synchronisation externe dudit premier pré-signal d'horloge de référence externe sur sa fréquence, et/ou
- ledit cinquième sous-module (SM5A) du premier module (MA) est agencé pour délivrer sur une sortie ledit signal d'horloge de référence interne, fourni par lesdits deuxième moyens de sélection (MS2), en vue d'une synchronisation externe du second pré-signal d'horloge de référence externe sur sa fréquence,
- ledit second module (MB) comprend des premiers moyens de sélection (MS1) propres à recevoir chaque autre signal d'horloge de référence interne et à délivrer sélectivement sur une sortie un autre signal d'horloge de référence interne reçu, des deuxièmes moyens de sélection (MS2) propres à recevoir ledit autre signal d'horloge de référence interne délivré par lesdits premiers moyens de sélection (MS1) pour le délivrer sélectivement sur une sortie raccordée audit quatrième sous-module (SM4B), et/ou des troisièmes moyens de sélection (MS3) propres à recevoir ledit autre signal d'horloge de référence interne délivré par lesdits premiers moyens de sélection (MS1) pour le délivrer sélectivement sur une sortie raccordée audit cinquième sous-module (SM5B),
- ledit quatrième sous-module (SM4B) du second module (MB) est agencé pour délivrer sur une sortie ledit autre signal d'horloge de référence interne, fourni par lesdits deuxième moyens de sélection (MS2), en vue d'une synchronisation externe dudit autre premier pré-signal d'horloge de référence externe sur sa fréquence, et/ou
- ledit cinquième sous-module (SM5B) du second module (MB) est agencé pour délivrer sur une sortie ledit autre signal d'horloge de référence interne, fourni par lesdits deuxième moyens de sélection (MS2), en vue d'une synchronisation externe dudit autre second pré-signal d'horloge de référence externe sur sa fréquence.

13. Dispositif selon la revendication 12, **caractérisé en ce que** ledit premier sous-module (SM1A,SM1B) et lesdits premiers (MS1), deuxièmes (MS2) et troisièmes (MS3) moyens de sélection de chacun desdits premier (MA) et second (MB) modules sont respectivement regroupés au sein d'un sixième sous-module (SM6A,SM6B).

14. Dispositif selon l'une des revendications 12 et 13, **caractérisé en ce que** lesdits deuxièmes (MS2) et/ou lesdits troisièmes (MS3) moyens de sélection de chacun desdits premier (MA) et second (MB) modules comportent une entrée propre à recevoir ledit premier ou ledit second signal de sortie, de manière à alimenter le quatrième (SM4A,SM4B) et/ou le cinquième (SM5A,SM5B) sous-module soit avec ledit signal d'horloge de référence interne délivré par lesdits premiers moyens de sélection (MS1), soit avec ledit premier ou ledit second signal de sortie.

15. Dispositif selon l'une des revendications 1 à 14, **caractérisé en ce que** ledit troisième sous-module (SM3A) dudit premier module (MA) est agencé pour changer la fréquence dudit premier signal principal et/ou dudit second signal principal de manière à constituer ledit premier signal de sortie, et **en ce que** ledit troisième sous-module (SM3B) dudit second module (MB) est agencé pour changer la fréquence dudit premier signal principal et/ou dudit second signal principal de manière à constituer ledit second signal de sortie.

16. Equipement pour un réseau de transport synchrone, **caractérisé en ce qu'**il comprend un dispositif de synchronisation (D) selon l'une des revendications précédentes.

## Claims

1. A synchronization system (D) for synchronous transport network equipment, the system being **characterized in that** it comprises:
- a first synchronization module (MA) comprising i) a first submodule (SM1A) adapted to deliver a first intermediate clock signal selectively defined on the basis of a signal selected from a first external reference clock signal and an internal reference clock signal, where applicable after a change of frequency, ii) a second submodule (SM2A) adapted to deliver a first main reference clock signal selectively defined on the basis of a signal selected from said first intermediate clock signal and a second intermediate clock signal, and iii) a third submodule (SM3A) adapted to deliver a first output reference clock signal selectively defined on the basis of a signal selected from said first main reference clock signal and a second main reference clock signal, where applicable after a change of frequency, and
- a second synchronization module (MB) comprising i) a first submodule (SM1 B) adapted to deliver said second intermediate clock signal selectively defined on the basis of a signal selected from another first external reference clock signal and another internal reference clock signal, where applicable after a change of frequency, ii) a second submodule (SM2B) adapted to deliver said second main reference clock signal selectively defined on the basis of one of said first and second intermediate clock signals, and iii) a third submodule (SM3B) adapted to deliver a second output reference clock signal selectively defined on the basis of one of said first and second main reference clock signals, where applicable after a change of frequency.

2. A system according to claim 1, **characterized in that** said first submodule (SM1A) of said first module (MA) is adapted to deliver said first intermediate clock signal selectively defined on the basis of a signal selected from said first external reference clock signal, a second external reference clock signal, and at least said internal reference clock signal, where applicable after a change of frequency, and said first submodule (SM1 B) of said second module (MB) is adapted to deliver said second intermediate clock signal selectively defined on the basis of a signal selected from said other first external reference clock signal, another second external reference clock signal, and at least said other internal reference clock signal, where applicable after a change of frequency.

3. A system according to claim 1, **characterized in that** said first submodule (SM1A) of said first module (MA) is adapted to deliver said first intermediate clock signal selectively defined on the basis of a signal selected from said first external reference clock signal, a second external reference clock signal, and at least two internal reference clock signals from different sources, where applicable after a change of frequency, and said first submodule (SM1B) of said second module (MB) is adapted to deliver said second intermediate clock signal selectively defined on the basis of a signal selected from said other first external reference clock signal, another second external reference clock signal, and at least two other internal reference clock signals from different sources, where applicable after a change of frequency.

4. A system according to any one of claims 1 to 3, **characterized in that** said first module (MA) further includes a fourth submodule (SM4A) adapted to generate said first external reference clock signal from a first external reference clock precursor signal and said second module (MB) further includes a fourth submodule (SM4B) adapted to generate said other first external reference clock signal from another first external reference clock precursor signal.

5. A system according to any one of claims 2 to 4, **characterized in that** said first module (MA) further includes a fifth submodule (SM5A) adapted to generate said second external reference clock signal from a second external reference clock precursor signal and said second module (MB) further includes a fifth submodule (SM5B) adapted to generate said other second external reference clock signal from another second external reference clock precursor signal.

6. A system according to claim 4 and claim 5, **characterized in that** said first and second external reference clock precursor signals are respectively sourced by a BITS and an SSU.

7. A system according to any one of claims 1 to 5, **characterized in that** said first submodule (SM1A) of said first module (MA) is adapted to change the frequency of said second external reference clock signal to constitute said first intermediate clock signal and said first submodule (SM1 B) of said second module (MB) is adapted to change the frequency of said other second external reference clock signal to constitute said second intermediate clock signal.

8. A system according to claim 4 and claim 5, **characterized in that** said first and second external reference clock precursor signals are respectively sourced by an SSU and a BITS.

9. A system according to any one of claims 1 to 5, **characterized in that** said first submodule (SM1A) of said first module (MA) is adapted to change the frequency of said first external reference clock signal to constitute said first intermediate clock signal and said first submodule (SM1B) of said second module (MB) is adapted to change the frequency of said other first external reference clock signal to constitute said second intermediate signal.

10. A system according to any one of claims 1 to 9, **characterized in that**:
- said second submodule (SM2A) of said first module (MA) i) has a primary input (E1A) adapted to receive said first intermediate clock signal, a secondary input (E2A) adapted to receive said second intermediate clock signal, and a tertiary input (E3A) adapted to receive said second main reference clock signal, and ii) is adapted to align the phase of said second main reference clock signal received at said tertiary input (E3A) to the phase of said first main reference clock signal in such a manner as to make up at least partly any phase difference between said second and first main reference clock signals, and
- said second submodule (SM2B) of said second module (MB) i) has a primary input (E1B) adapted to receive said first intermediate clock signal, a secondary input (E2B) adapted to receive said first intermediate clock signal, and a tertiary input (E3B) adapted to receive said first main reference clock signal, and ii) is adapted to align the phase of said first main reference clock signal received at said tertiary input (E3B) to the phase of said second main reference clock signal in such a manner as to make up at least partly any phase difference between said first and second main reference clock signals.

11. A system according to any one of claims 4 to 10, **characterized in that** said third submodule (SM3A) of said first module (MA) has at least two outputs adapted to deliver said first output reference clock signal at two or more different frequencies and said third submodule (SM3B) of said second module (MB) has at least two outputs adapted to deliver said second output reference clock signal at two or more different frequencies.

12. A system according to any one of claims 4 to 11, **characterized in that**:
- said first module (MA) includes first selection means (MS1) adapted to receive each internal reference clock signal and to deliver selectively at an output a received internal reference clock signal, second selection means (MS2) adapted to receive said internal reference clock signal delivered by said first selection means (SM1) in order to deliver it selectively to an output connected to said fourth submodule (SM4A), and/or third selection means (MS3) adapted to receive said internal reference clock signal delivered by said first selection means (MS1) in order to deliver it selectively to an output connected to the fifth submodule (SM5A),
- said fourth submodule (SM4A) of the first module (MA) is adapted to deliver to an output said internal reference clock signal supplied by said second selection means (MS2) with a view to external synchronization of said first external reference clock precursor signal to its frequency, and/or
- said fifth submodule (SM5A) of the first module (MA) is adapted to deliver to an output said internal reference clock signal supplied by said second selection means (MS2) with a view to external synchronization of the second external reference clock precursor signal to its frequency,
- said second module (MB) includes first selection means (MS1) adapted to receive each other internal reference clock signal and to deliver selectively at an output another received internal reference clock signal, second selection means (MS2) adapted to receive said other internal reference clock signal delivered by said first selection means (SM1) in order to deliver it selectively to an output connected to said fourth submodule (SM4B), and/or third selection means (MS3) adapted to receive said other internal reference clock signal delivered by said first selection means (MS1) in order to deliver it selectively to an output connected to said fifth submodule (SM5B),
- said fourth submodule (SM4B) of the second module (MB) is adapted to deliver to an output said other internal reference clock signal supplied by said second selection means (MS2) with a view to external synchronization of said other external reference clock precursor signal to its frequency, and/or
- said fifth submodule (SM5B) of the second module (MB) is adapted to deliver to an output said other internal reference clock signal supplied by said second selection means (MS2) with a view to external synchronization of said other external reference clock precursor signal to its frequency.

13. A system according to claim 12, **characterized in that** said first submodule (SM1A, SM1B) and said first selection means (MS1), said second selection means (MS2) and said third selection means (MS3) of each of said first module (MA) and said second module (MB) are respectively grouped together within a respective sixth submodule (SM6A, SM6B).

14. A system according to claim 12 and claim 13, **characterized in that** said second selection means (MS2) and/or said third selection means (MS3) of each of said first module (MA) and said second module (MB) has an input adapted to receive said first output signal or said second output signal in such a manner as to feed the fourth submodule (SM4A, SM4B) and/or the fifth submodule (SM5A, SM5B) either with said internal reference clock signal delivered by said first selection means (MS1) or with said first output signal or said second output signal.

15. A system according to any one of claims 1 to 14, **characterized in that** said third submodule (SM3A) of said first module (MA) is adapted to change the frequency of said first main reference clock signal and/or said second main reference clock signal in such a manner as to constitute said first output reference clock signal and said third submodule (SM3B) of said first module (MB) is adapted to change the frequency of said first main reference clock signal and/or said second main reference clock signal in such a manner as to constitute said second output reference clock signal.

16. Equipment for a synchronous transport network, **characterized in that** it includes a synchronization system (D) according to any preceding claim.

## Patentansprüche

1. Synchronisationsvorrichtung (D) für ein synchrones Telekommunikationsgerät, **dadurch gekennzeichnet, dass** sie Folgendes umfasst:
- ein erstes Synchronisationsmodul (MA), bestehend aus i) einem ersten Submodul (SM1A), das entsprechend ausgeführt ist, um ein erstes Zwischentaktsignal zu liefern, das selektiv ausgehend von einem Signal definiert wird, das nach einem eventuellen Frequenzwechsel unter mindestens einem ersten externen Referenztaktsignal und mindestens einem internen Taktsignal gewählt wird, ii) einem zweiten Submodul (SM2A), das entsprechend ausgeführt ist, um ein erstes Referenztaktsignal zu liefern, das so genannte Hauptsignal, das selektiv ausgehend von einem Signal definiert wird, das unter dem genannten ersten Zwischentaktsignal und einem zweiten Zwischentaktsignal gewählt wird; und iii) einem dritten Submodul (SM3A), das entsprechend ausgeführt ist, um ein erstes Referenztaktsignal zu liefern, das so genannte Ausgangssignal, das selektiv ausgehend von einem Signal definiert wird, das nach einem eventuellen Frequenzwechsel unter dem genannten ersten Hauptsignal und einem zweiten Hauptsignal gewählt wird, und
- ein zweites Synchronisationsmodul (MB), bestehend aus i) einem ersten Submodul (SM1B), das entsprechend ausgeführt ist, um das genannte zweite Zwischentaktsignal zu liefern, das selektiv ausgehend von einem Signal definiert wird, das nach einem eventuellen Frequenzwechsel unter mindestens einem anderen externen Referenztaktsignal und mindestens einem anderen internen Referenztaktsignal gewählt wird, ii) einem zweiten Submodul (SM2B), das entsprechend ausgeführt ist, um das genannte zweite Hauptsignal zu liefern, das selektiv ausgehend von einem der genannten zweiten und ersten Zwischentaktsignale definiert wird, und iii) einem dritten Submodul (SM3B), das entsprechend ausgeführt ist, um ein zweites Referenztaktsignal zu liefern, das so genannte Ausgangssignal, das nach einem eventuellen Frequenzwechsel selektiv ausgehend von einem der genannten zweiten und ersten Hauptsignale definiert wird.

2. Vorrichtung gemäß Anspruch 1, **dadurch gekennzeichnet, dass** das genannte erste Submodul (SM1A) des genannten ersten Moduls (MA) entsprechend ausgeführt ist, um das genannte erste Zwischentaktsignal zu liefern, das selektiv ausgehend von einem Signal definiert wird, das nach einem eventuellen Frequenzwechsel unter dem genannten ersten externen Signal, einem zweiten externen Referenztaktsignal und mindestens dem genannten internen Referenztaktsignal gewählt wird, sowie **dadurch**, dass das genannte erste Submodul (SM1B) des genannten zweiten Moduls (MB) entsprechend ausgeführt ist, um das genannte zweite Zwischentaktsignal zu liefern, das selektiv ausgehend von einem Signal definiert wird, das nach einem eventuellen Frequenzwechsel unter dem genannten anderen externen Signal, dem anderen zweiten externen Referenztaktsignal und mindestens dem genannten anderen internen Referenztaktsignal gewählt wird.

3. Vorrichtung gemäß Anspruch 1, **dadurch gekennzeichnet, dass** das genannte erste Submodul (SM1A) des genannten ersten Moduls (MA) entsprechend ausgeführt ist, um das genannte erste Zwischentaktsignal zu liefern, das selektiv ausgehend von einem Signal definiert wird, das nach einem eventuellen Frequenzwechsel unter dem genannten ersten externen Signal, einem zweiten externen Referenztaktsignal und mindestens zwei internen Referenztaktsignalen verschiedenen Ursprungs gewählt wird, sowie **dadurch**, dass das genannte erste Submodul (SM1B) des genannten zweiten Moduls (MB) entsprechend ausgeführt ist, um das genannte zweite Zwischentaktsignal zu liefern, das selektiv ausgehend von einem Signal definiert wird, das nach einem eventuellen Frequenzwechsel unter dem genannten anderen ersten externen Signal, einem anderen zweiten externen Referenztaktsignal und mindestens zwei anderen internen Referenztaktsignalen verschiedenen Ursprungs gewählt wird.

4. Vorrichtung gemäß einem der Ansprüche 1 bis 3, **dadurch gekennzeichnet, dass** das genannte erste Modul (MA) ein viertes Submodul (SM4A) umfasst, das entsprechend ausgeführt ist, um das genannte erste externe Referenztaktsignal ausgehend von einem ersten externen Referenztakt-Vorsignal zu erzeugen, sowie **dadurch**, dass das genannte zweite Modul (MB) ein viertes Submodul (SM4B) umfasst, das entsprechend ausgeführt ist, um das genannte andere erste externe Referenztaktsignal ausgehend von einem anderen ersten externen Referenztakt-Vorsignal zu erzeugen.

5. Vorrichtung gemäß einem der Ansprüche 2 bis 4, **dadurch gekennzeichnet, dass** das erste Modul (MA) ein fünftes Submodul (SM5A) umfasst, das entsprechend ausgeführt ist, um das genannte zweite externe Referenztaktsignal ausgehend von einem zweiten externen Referenztakt-Vorsignal zu erzeugen, sowie **dadurch**, dass das genannte zweite Modul (MB) ein fünftes Submodul (SM5B) umfasst, das entsprechend ausgeführt ist, um das genannte andere zweite externe Referenztaktsignal ausgehend von einem anderen zweiten externen Referenztakt-Vorsignal zu erzeugen.

6. Vorrichtung gemäß einem der Ansprüche 4 und 5, **dadurch gekennzeichnet, dass** die genannten ersten und zweiten externen Referenztakt-Vorsignale jeweils aus einer Ursprungseinrichtung vom Typ BITS und einer Ursprungseinrichtung vom Typ SSU hervorgehen.

7. Vorrichtung gemäß einem der Ansprüche 1 bis 5, **dadurch gekennzeichnet, dass** das genannte erste Submodul (SM1A) des genannten ersten Moduls (MA) entsprechend ausgeführt ist, um die Frequenz des genannten zweiten externen Signals zu ändern, um das genannte erste Zwischensignal zu bilden, sowie **dadurch**, dass das genannte erste Submodul (SM1B) des genannten zweiten Moduls (MB) entsprechend ausgeführt ist, um die Frequenz des genannten anderen zweiten externen Signals zu ändern, um das genannte zweite Zwischensignal zu bilden.

8. Vorrichtung gemäß einem der Ansprüche 4 und 5, **dadurch gekennzeichnet, dass** die genannten ersten und zweiten externen Referenztakt-Vorsignale jeweils aus einer Ursprungseinrichtung vom Typ SSU und einer Ursprungseinrichtung vom Typ BITS hervorgehen.

9. Vorrichtung gemäß einem der Ansprüche 1 bis 5, **dadurch gekennzeichnet, dass** das genannte erste Submodul (SM1A) des genannten ersten Moduls (MA) entsprechend ausgeführt ist, um die Frequenz des genannten ersten externen Signals zu ändern, um das genannte erste Zwischensignal zu bilden, sowie **dadurch**, dass das genannte zweite Submodul (SM1B) des genannten zweiten Moduls (MB) entsprechend ausgeführt ist, um die Frequenz des genannten anderen ersten externen Signals zu ändern, um das genannte zweite Zwischensignal zu bilden.

10. Vorrichtung gemäß einem der Ansprüche 1 bis 9, **dadurch gekennzeichnet, dass**:
- das genannte zweite Submodul (SM2A) des genannten ersten Moduls (MA) i) einen Primäreingang (E1A), der geeignet ist, das genannte erste Zwischentaktsignal zu empfangen, einen Sekundäreingang (E2A), der geeignet ist, das genannte zweite Zwischentaktsignal zu empfangen, und einen Tertiäreingang (E3A) umfasst, der geeignet ist, das genannte zweite Hauptsignal zu empfangen, ii) entsprechend ausgeführt ist, um die Phase des genannten zweiten empfangenen Hauptsignals an dem genannten Tertiäreingang (E3A) mit der Phase des genannten ersten Hauptsignals abzugleichen, um eine eventuelle Phasenabweichung zwischen dem genannten ersten und zweiten Hauptsignal zumindest teilweise zu beseitigen, und
- das genannte zweite Submodul (SM2B) des genannten zweiten Moduls (MB) i) einen Primäreingang (E1B), der geeignet ist, das genannte zweite Zwischentaktsignal zu empfangen, einen Sekundäreingang (E2B), der geeignet ist, das genannte erste Zwischentaktsignal zu empfangen, und einen Tertiäreingang (E3B) umfasst, der geeignet ist, das genannte erste Hauptsignal zu empfangen, und ii) entsprechend ausgeführt ist, um die Phase des genannten empfangenen ersten Hauptsignals an dem genannten Tertiäreingang (E3B) mit der Phase des genannten zweiten Hauptsignals abzugleichen, um eine eventuelle Phasenabweichung zwischen dem genannten ersten und zweiten Hauptsignal zumindest teilweise zu beseitigen.

11. Vorrichtung gemäß einem der Ansprüche 4 bis 10, **dadurch gekennzeichnet, dass** das genannte dritte Submodul (SM3A) des genannten ersten Moduls (MA) mindestens zwei Ausgänge umfasst, die das genannte erste Ausgangssignal in mindestens zwei verschiedenen Frequenzen liefern können, sowie **dadurch**, dass das genannte dritte Submodul (SM3B) des genannten zweiten Moduls (MB) mindestens zwei Ausgänge umfasst, die das genannte zweite Ausgangssignal in mindestens zwei verschiedenen Frequenzen liefern können.

12. Vorrichtung gemäß einem der Ansprüche 4 bis 11, **dadurch gekennzeichnet, dass**:
- das erste Modul (MA) erste Auswahleinrichtungen (MS1), die geeignet sind, jedes interne Referenztaktsignal zu empfangen und selektiv an einem Ausgang ein empfangenes internes Referenztaktsignal zu liefern, zweite Auswahleinrichtungen (MS2), die geeignet sind, das genannte interne Referenztaktsignal zu empfangen, das von den genannten ersten Auswahleinrichtungen (MS1) geliefert wird, um es selektiv an einen Anschluss zu liefern, der mit dem genannten vierten Submodul (SM4A) verbunden ist, und/oder dritte Auswahleinrichtungen (MS3) umfasst, die geeignet sind, das genannte interne Referenztaktsignal, das von den genannten ersten Auswahleinrichtungen (MS1) geliefert wird, selektiv an einen Ausgang zu liefern, der mit dem genannten fünften Submodul (SM5A) verbunden ist,
- das genannte vierte Submodul (SM4A) des ersten Moduls (MA) entsprechend ausgeführt ist, um das genannte interne Referenztaktsignal, das von den genannten zweiten Auswahleinrichtungen (MS2) geliefert wird, an einen Ausgang zu liefern, um eine externe Synchronisation des genannten ersten externen Referenztakt-Vorsignals mit seiner Frequenz zu bewirken, und/oder
- das genannte fünfte Submodul (SM5A) des ersten Moduls (MA) entsprechend ausgeführt ist, um das genannte interne Referenztaktsignal, das von den genannten zweiten Auswahleinrichtungen (MS2) geliefert wird, an einen Ausgang zu liefern, um eine externe Synchronisation des zweiten externen Referenztakt-Vorsignals mit seiner Frequenz zu bewirken,
- das genannte zweite Modul (MB) erste Auswahleinrichtungen (MS1), die geeignet sind, jedes andere interne Referenztaktsignal zu empfangen und ein anderes empfangenes internes Referenztaktsignal selektiv an einen Ausgang zu liefern, zweite Auswahleinrichtungen (MS2), die geeignet sind, das genannte andere gelieferte interne Referenztaktsignal, das von den genannten ersten Auswahleinrichtungen (MS1) geliefert wird, zu empfangen, um es selektiv an einen Ausgang zu liefern, der mit dem genannten vierten Submodul (SM4B) verbunden ist, und/oder dritte Auswahleinrichtungen (MS3) umfasst, die geeignet sind, um das genannte andere interne Referenztaktsignal zu empfangen, das von den genannten ersten Auswahleinrichtungen (MS1) geliefert wird, um es selektiv an einen Ausgang zu liefern, der mit dem genannten fünften Submodul (SM5B) verbunden ist,
- das genannte vierte Submodul (SM4B) des zweiten Moduls (MB) entsprechend ausgeführt ist, um das genannte andere interne Referenztaktsignal, das von den genannten zweiten Auswahleinrichtungen (MS2) geliefert wird, an einen Ausgang zu liefern, um eine externe Synchronisierung des genannten anderen ersten Referenztakt-Vorsignals mit seiner Frequenz zu bewirken, und /oder
- das genannte fünfte Submodul (SM5B) des zweiten Moduls (MB) entsprechend ausgeführt ist, um das genannte andere interne Referenztaktsignal, das von den genannten zweiten Auswahleinrichtungen (MS2) geliefert wird, an einen Ausgang zu liefern, um eine externe Synchronisation des genannten anderen zweiten externen Referenztakt-Vorsignals mit seiner Frequenz zu bewirken.

13. Vorrichtung gemäß Anspruch 12, **dadurch gekennzeichnet, dass** das genannte erste Submodul (SM1A, SM1B) und die genannten ersten (MS1), zweiten (MS2) und dritten (MS3) Auswahleinrichtungen der genannten ersten (MA) und zweiten (MB) Module jeweils innerhalb eines sechsten Submoduls (SM6A, SM6B) angeordnet sind.

14. Vorrichtung gemäß einem der Ansprüche 12 und 13, **dadurch gekennzeichnet, dass** die genannten zweiten (MS2) und/oder die genannten dritten (MS3) Auswahleinrichtungen des genannten ersten (MA) und zweiten (MB) Moduls jeweils einen Eingang umfassen, der geeignet ist, das genannte erste oder das genannte zweite Ausgangssignal zu empfangen, um dem vierten (SM4A, SM4B) und/oder dem fünften (SM5A, SM5B) Submodul entweder das genannte interne Referenztaktsignal, das von den genannten ersten Auswahleinrichtungen (MS1) geliefert wird, oder das genannte erste oder das genannte zweite Ausgangssignal zuzuführen.

15. Vorrichtung gemäß einem der Ansprüche 1 bis 14, **dadurch gekennzeichnet, dass** das genannte dritte Submodul (SM3A) des genannten ersten Moduls (MA) entsprechend ausgeführt ist, um die Frequenz des genannten ersten Hauptsignals und/oder des genannten zweiten Hauptsignals zu ändern, um das genannte erste Ausgangssignal zu bilden, sowie **dadurch**, dass das genannte dritte Submodul (SM3B) des genannten zweiten Moduls (MB) entsprechend ausgeführt ist, um die Frequenz des genannten ersten Hauptsignals und/oder des genannten zweiten Hauptsignals zu ändern, um das genannte zweite Ausgangssignal zu bilden.

16. Synchrones Telekommunikationsgerät, **dadurch gekennzeichnet, dass** es eine Synchronisationsvorrichtung (D) gemäß einem der vorstehenden Ansprüche umfasst.
